# EUROPEAN PATENT APPLICATION

(11) **EP 4 693 205 A1**
(43) Date of publication of application: **11.02.2026**
(21) Application number: 24192779.7
(22) Date of filing: 05.08.2024
(51) Int. Cl.: G06T 17/05, G06T 17/30, G06V 20/10

(54) **METHOD AND SYSTEM FOR ROAD SURFACE RECONSTRUCTION**

(71) Applicant: DeepScenario GmbH, 70565 Stuttgart (DE)
(72) Inventor: Dhaouadi, Oussema, Stuttgart (DE)
(74) Representative: Legl, Stefan

(57) **Abstract**

The present disclosure relates to a computer-implemented method for road surface reconstruction, comprising:
- obtaining a road point cloud representing a surface of at least one road;
- performing a fitting process based on the road point cloud using a parametric three-dimensional surface model to generate a road surface reconstruction of the surface of the at least one road; and
- outputting the road surface reconstruction.

## Description

### FIELD

Embodiments of the present disclosure relate to a computer-implemented method for road surface reconstruction, a computer program including instructions for carrying out the method, a computer-readable storage medium including instructions for carrying out the method, and a data processing system for road surface reconstruction. More particularly, the present disclosure relates to a tool for modeling smooth and flexible road surfaces.

### BACKGROUND

Road surface reconstruction is essential for various applications, including autonomous driving, urban planning, and virtual simulations. The primary goal is to achieve accurate, smooth, and complete reconstructions. Despite advancements in the field, current methods often fall short in two key areas: smoothness and completeness of the road meshes.

Traditional methods rely heavily on various sensors to capture detailed environmental data and achieve a high level of accuracy. Techniques such as Lidar, stereo cameras, and depth cameras are prevalent. However, these methods are costly and complex, without being able to guarantee a smooth reconstruction of the road surface. Methods that rely on monocular cameras, which are inexpensive and widely used, emphasize accuracy but often neglect the smoothness of the resulting surfaces. This oversight can lead to road meshes that are bumpy and uneven. Independent of the sensor or the reconstruction method, non-smooth road surfaces impact the performance of subsequent applications like vehicle simulations and trajectory planning. For example, in detailed simulations requiring high fidelity, the lack of smoothness can result in unrealistic vehicle behavior, as the raw reconstruction shows significant bumps and unevenness. Additionally, some methods assume a flat road, which might be insufficient for accurately modeling the surface, especially on steep roads.

Moreover, another significant issue with current reconstruction methods is the presence of holes and incomplete areas in the road meshes. These gaps can cause critical failures in applications dependent on continuous surface data, such as automated driving.

Known solutions often utilize planar or grid-based approaches for surface reconstruction. These methods involve fitting planes or directly triangulating a regular grid from digital elevation map (DEM) data. While somewhat effective, these approaches have limitations in handling complex road geometries and surfaces or can handle complex road geometry but are sensitive to noise resulting to uneven or bumpy surfaces. Other methods integrate regular grid triangulation for digital terrain models (DTMs), offering a structured approach but still lacking flexibility and precision for diverse terrains. In particular, DTM is a specific type of DEM where buildings, vegetation, etc., are not modeled. Therefore, the same properties of DEM are also valid for the DTM, except that DTMs are not easy to obtain. They are expensive and are computed using algorithms that are still not 100% accurate. Often, DTM data provided by the government uses high-end LIDAR data, computationally expensive algorithms, and extensive post-processing.

For technical applications, it is therefore crucial to (1) achieve smoothness in road surface reconstructions to ensure realistic simulations and effective trajectory planning, (2) ensure completeness, with no holes or gaps in the road meshes, to maintain the reliability of navigation and automated driving systems, (3) provide robustness against noise to handle real-world data accurately and (4) offer flexibility to adapt to varying topographies and complex urban environments.

### SUMMARY

In light of the above, a computer-implemented method for road surface reconstruction, a computer program including instructions for carrying out the method, a computer-readable storage medium including instructions for carrying out the method, and a data processing system for road surface reconstruction are provided.

It is an object of the present disclosure to provide an improved road surface technique. It is another object of the present disclosure to improve trajectory planning, trajectory prediction, vehicle simulation and/or traffic simulation in technical applications such as autonomous driving.

The objects are solved by the features of the independent claims. Preferred embodiments are defined in the dependent claims.

According to an independent aspect of the present disclosure, a computer-implemented method for road surface reconstruction is provided. The method includes obtaining a road point cloud representing a surface of at least one road; performing a fitting process based on the road point cloud using a parametric three-dimensional surface model to generate a road surface reconstruction of the surface of the at least one road; and outputting the road surface reconstruction.

According to some embodiments, which can be combined with other embodiments described herein, the fitting process includes optimizing one or more parameters of the parametric three-dimensional surface model.

According to some embodiments, which can be combined with other embodiments described herein, optimizing one or more parameters of the parametric three-dimensional surface model includes defining evaluation points or areas where a loss function is evaluated during optimizing the one or more parameters; defining the loss function to measure closeness between the road point cloud and the parametric three-dimensional surface model; adding a regularization term to the loss function (e.g., to avoid overfitting and/or excessive elevation differences); and performing optimization to get the optimal parameters of the parametric three-dimensional surface model. The optimization may be a gradient descent optimization. However, the present disclosure is not limited thereto and other non-linear optimizers, such as stochastic methods (e.g., genetic algorithms), can also be used.

According to some embodiments, which can be combined with other embodiments described herein, the parametric three-dimensional surface model is a Non-Uniform Rational B-Splines, NURBS, model.

According to some embodiments, which can be combined with other embodiments described herein, the one or more parameters which are optimized include at least one of control points, weights, and knots of the NURBS model.

According to some embodiments, which can be combined with other embodiments described herein, the one or more parameters which are optimized are control points and weights of the NURBS model.

According to some embodiments, which can be combined with other embodiments described herein, the one or more parameters which are optimized are, control points weights, and knots of the NURBS model.

According to some embodiments, which can be combined with other embodiments described herein, the control points are initialized at a position in 3D space; and the knots are kept uniform and only a z-component of the control points is optimized after initialization.

According to some embodiments, which can be combined with other embodiments described herein, the method further includes applying a clustering algorithm to the road point cloud to generate a filtered road point cloud.

According to some embodiments, which can be combined with other embodiments described herein, the fitting process is applied to the filtered road point cloud to generate the road surface reconstruction of the surface of the at least one road.

According to some embodiments, which can be combined with other embodiments described herein, the clustering algorithm is an Elevation-Constrained Spatial Road Clustering, ECSRC, algorithm.

According to some embodiments, which can be combined with other embodiments described herein, the road point cloud is based on sensor data, such as segmented LiDAR, stereo camera, and/or RGBD data.

According to some embodiments, which can be combined with other embodiments described herein, the road point cloud is obtained by a 3D or 2.5D reconstruction with semantic segmentation, such as a 3D or 2.5D reconstruction of image data.

According to some embodiments, which can be combined with other embodiments described herein, the road point cloud is obtained by means of an elevation model with segmented orthophotos.

According to some embodiments, which can be combined with other embodiments described herein, the method further includes obtaining a terrain point cloud representing an area outside the at least one road.

According to some embodiments, which can be combined with other embodiments described herein, the parametric three-dimensional surface model further uses the road point cloud and terrain point cloud to generate the road surface reconstruction of the surface of the at least one road.

According to some embodiments, which can be combined with other embodiments described herein, an additional loss term is added to the loss function to fit the parametric three-dimensional surface model to the terrain as well.

According to some embodiments, which can be combined with other embodiments described herein, the method further includes obtaining a scene point cloud; and generating the road point cloud and the terrain point cloud from the scene point cloud.

According to some embodiments, which can be combined with other embodiments described herein, the terrain point cloud is obtained using Digital Surface Model, DSM, Generation or Digital Terrain Model, DTM, Generation.

According to some embodiments, which can be combined with other embodiments described herein, the method further includes applying a dynamic sampling technique to the road surface reconstruction generated by the parametric three-dimensional surface model to generate a mesh with varying resolutions.

According to some embodiments, which can be combined with other embodiments described herein, a higher sampling rate is used for a road area and a lower sampling rate is used for surrounding terrain.

According to some embodiments, which can be combined with other embodiments described herein, the method further includes performing at least one quality check to evaluate a surface quality of the reconstructed road surface.

According to some embodiments, which can be combined with other embodiments described herein, the method further includes performing at least one quality check to evaluate a surface quality of the reconstructed road surface based on a surface gradient map and/or fitting distances.

According to some non-limiting embodiments, which can be combined with other embodiments described herein, the road surface reconstruction is used for trajectory planning, trajectory prediction, vehicle simulation and/or traffic simulation, e.g., of an automated vehicle, or is configured for trajectory planning, trajectory prediction, vehicle simulation and/or traffic simulation, e.g., of an automated vehicle.

According to some embodiments, which can be combined with other embodiments described herein, the method further includes providing the road surface reconstruction to a module or system for trajectory planning, trajectory prediction, vehicle simulation and/or traffic simulation, e.g., of an automated vehicle.

According to another independent aspect of the present disclosure, a computer program is provided. The computer program has instructions which, when the program is executed by a computer, cause the computer to carry out the method for road surface reconstruction according to the embodiments described in this document.

According to another independent aspect of the present disclosure, a computer-readable storage medium is provided. The computer-readable storage medium has instructions which, when the program is executed by a computer, cause the computer to carry out the method for road surface reconstruction according to the embodiments described in this document.

According to some embodiments, which can be combined with other embodiments described herein, the computer-readable storage medium is a non-transitory computer-readable storage (or memory) medium.

According to another independent aspect of the present disclosure, a data processing system for road surface reconstruction is provided. The data processing system includes one or more processors configured to obtain a road point cloud representing a surface of at least one road; perform a fitting process based on the road point cloud using a parametric three-dimensional surface model to generate a road surface reconstruction of the surface of the at least one road; and output the road surface reconstruction.

According to some embodiments, which can be combined with other embodiments described herein, the one or more processors of the data processing system are configured to perform the computer-implemented method for road surface reconstruction according to the embodiments described in this document.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a flow chart of a computer-implemented method for road surface reconstruction according to embodiments described herein; and
- FIG. 2: shows a method for reconstructing a road surface according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The terms "comprising" and "including" open-ended. As used in the appended claims, these terms do not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware, for example, circuits, memory storing program instructions executable to implement the operation, etc. Additionally, "configured to" can include generic structure (e.g., generic circuitry) that is manipulated by software and/or firmware (e.g., an FPGA or a generalpurpose processor executing software) to operate in a manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

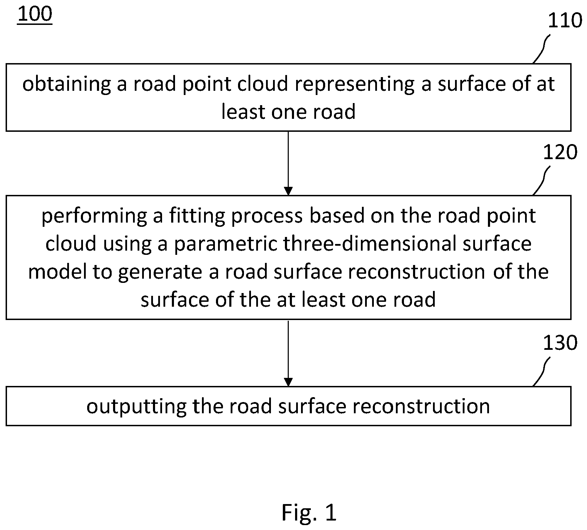

FIG. 1 shows a flow chart of a computer-implemented method 100 for road surface reconstruction according to embodiments described herein. The method 100 can be conducted by means of computer programs, software, computer software products and the interrelated controllers, which can have a CPU (and/or GPU), a memory, a user interface, and input and output means being in communication with the corresponding components of a system.

The method 100 includes in block 110 obtaining a road point cloud representing a surface of at least one road; in block 120 performing a fitting process based on the road point cloud using a parametric three-dimensional surface model to generate a road surface reconstruction of the surface of the at least one road; and in block 130 outputting the road surface reconstruction.

The parametric three-dimensional surface model used in the fitting process of the road surface provides the following non-limiting effects and benefits:
1. Smoothness in road surface reconstructions can be achieved to ensure realistic simulations and effective trajectory planning, trajectory prediction, vehicle simulation and/or traffic simulation. However, the present disclosure is not limited thereto, and other technical applications are possible.
2. Completeness can be assured, with no holes or gaps in the road meshes, to maintain for instance the reliability of navigation and automated driving systems.
3. Robustness against noise can be ensured to handle real-world data accurately.
4. Flexibility is offered to adapt to varying topographies and complex urban environments.

A parametric three-dimensional surface model is generally understood as a mathematical representation of a surface in three-dimensional space using parameters. Unlike other surface representations, which describe surfaces as functions of x, y, and z, parametric models use parameters to define points on the surface. These parameters map to points in 3D space through parametric equations.

A road is a thoroughfare, route, or way on land between two places that has been paved or otherwise improved to allow travel by foot, vehicle, or other means. Roads facilitate the transportation of goods and passengers, playing a critical role in the infrastructure of a region. They can vary significantly in size, structure, and materials used, depending on their intended use and the amount of traffic they are designed to handle.

The surface of the road, often referred to as the roadway surface or pavement, is the top layer of the road where for instance vehicles travel. This surface is often designed to provide a smooth and durable riding surface that ensures safety and comfort for vehicles and pedestrians.

Modeling the road is essential for applications in a wide range of industries, such as:
1. Autonomous Driving and Robotics: The embodiments of the present disclosure can be used to create accurate and smooth road surface models essential for navigation and path planning in autonomous vehicles, enhancing their ability to safely navigate complex environments.
2. Urban Planning and Infrastructure Management: Urban planners and civil engineers can use the embodiments of the present disclosure to develop precise digital models of road networks, aiding in infrastructure maintenance, road design, and traffic management.
3. Traffic Simulation and Analysis: High-fidelity road models created by the embodiments of the present disclosure can be used in traffic simulations to study vehicle behavior under various conditions, aiding in traffic flow optimization and congestion management.
4. Virtual and Augmented Reality: Accurate road surface models are crucial for creating realistic virtual environments in applications like virtual reality driving simulations, gaming, and training programs.
5. Geographical Information Systems (GIS): The embodiments of the present disclosure can enhance GIS applications by providing detailed and accurate road surface data, which can be used for mapping, environmental monitoring, and disaster response planning.
6. Environmental Monitoring: The technology can be used to monitor and model changes in road conditions over time, providing data for environmental impact assessments and long-term infrastructure planning.

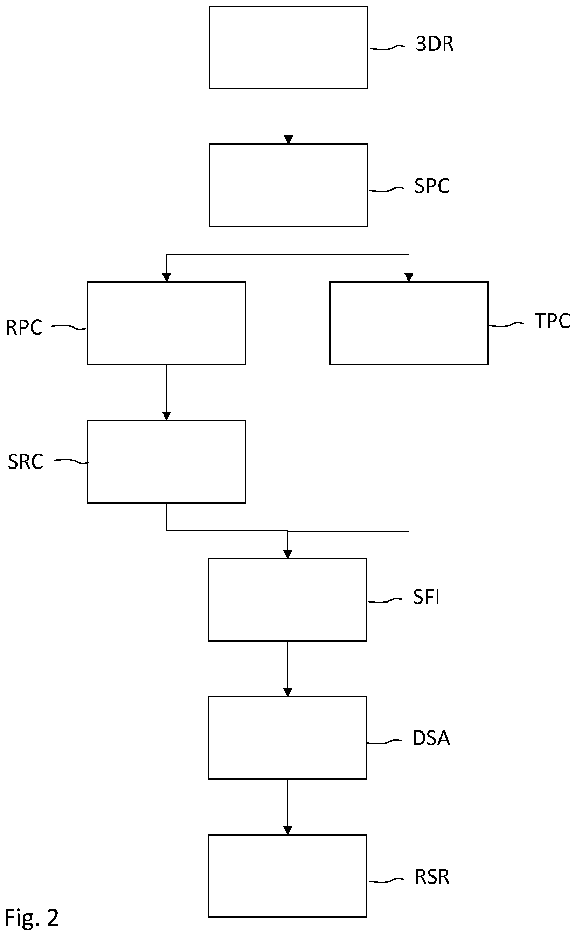

FIG. 2 shows a process for reconstructing a road surface according to embodiments described herein.

The process is designed to reconstruct road surfaces with high accuracy, smoothness, and completeness by employing advanced techniques throughout its pipeline. Below is a detailed and non-limiting description of exemplary steps involved in the pipeline.

### Road Point Cloud Generation

The basis of the pipeline is a road point cloud (box RPC in FIG. 2) that can be gathered using various techniques, such as LiDAR sensors with a point cloud classifier, 3D reconstruction techniques with semantic segmentation, or elevation models (2.5D data) with segmented orthophotos. The road point cloud contains points identified as part of the road surface.

In one example, a road point cloud can be generated from a 3D mesh reconstruction (box 3DR in FIG. 2). An example workflow can include:
1. 3D Reconstruction: One method to gather a point cloud of a scene is through a textured mesh reconstruction using techniques like Structure from Motion (SfM) applied to images captured by cameras. A dense sampling across the surface of the textured mesh produces the scene point cloud (box SPC in FIG. 2). A digital orthophoto, consisting of (e.g., georeferenced) RGB raster, can be synthesized by rendering the surface of the textured mesh using an orthographic camera model. This orthophoto provides a topdown, uniform-scale view of the road surface, essential for accurate semantic segmentation.
2. Semantic Segmentation: The orthophoto can be used for semantic segmentation, which leverages deep learning to accurately identify and delineate the road surface, resulting in a binary road mask. The orthophoto is divided into smaller tiles to increase segmentation accuracy, allowing the model to focus on detailed areas individually. Each tile is processed to extract road segments, resulting in a precise road mask that highlights the boundaries and features of the road.
3. Point Cloud Classification: By leveraging the road mask, the road point cloud can be extracted (box RPC in FIG. 2).

### Terrain Point Cloud Generation

To support the entire terrain in the NURBS surface fitting, a terrain point cloud representing the area outside the road can be generated (box TPC in FIG. 2). One exemplary way for generating a terrain point cloud involves the following two steps:
1. Digital Surface Model (DSM) Generation: Given a scene point cloud that describes the entire area, a DSM is generated, capturing the elevation of all surface features, including vegetation, buildings, and the road. The model describes an elevation grid, where each elevation value is obtained by selecting the maximum elevation among the points within the same grid cell. This model is beneficial for understanding surface height variations and subsequent terrain modeling.
2. Digital Terrain Model (DTM) Generation: The DSM is utilized to generate a DTM, representing the bare earth surface by removing objects such as trees and buildings. The DTM offers a clear view of the underlying terrain. The resulting DTM can be converted into a terrain point cloud (box TPC in FIG. 2).

### Refining Noise

Using the road point cloud, the Elevation-Constrained Spatial Road Clustering (ECSRC) algorithm can be applied (box SRC in FIG. 2). This algorithm operates based on a region-growing approach, clustering road segments by calculating distances between them and merging clusters that are close. In the XY plane, the algorithm identifies neighboring candidates, while the assignment of neighbors is based on elevation differences up to a specific threshold. Clusters are then merged if they are close enough, resulting in a filtered road point cloud consisting of a set of clean road clusters, which eliminates points from, for example, building facades.

### NURBS Fitting

A NURBS (Non-Uniform Rational B-Splines) surface is fitted to the clustered road points using an autograd method (box SFI in FIG. 2). This approach treats the fitting process like a neural network, enabling differentiation and optimization. The parameters used to optimize the surface are the control points and the corresponding weights. In some embodiments, optimizing over the knot vectors is possible but not necessarily required. The input point cloud is structured into a predefined grid, and for each grid point, an elevation is assigned within the grid cell. The fitting process employs gradient descent optimization to minimize a loss function including, or consisting of:
1. A road loss that minimizes the distance between the input road point cloud and the corresponding points on the generated surface.
2. A terrain loss (optional) that minimizes the points outside the road and the corresponding points on the generated surface, supporting the surface outside the road region. The terrain point cloud obtained from the DTM (see above) can be used here.
3. A(n optional) regularization term that controls the parameters, e.g., the control points of the NURBS surface, adjusting the general shape of the surface to avoid drastic changes within small ranges.

NURBS provide the flexibility to create smooth, continuous surfaces that accurately represent the road.

### Dynamic Sampling Technique

A dynamic sampling technique/algorithm can be employed to generate a mesh with varying resolutions to emphasize high smoothness in the area of the road (box DSA in FIG. 2). This technique is guided by a road mask, which can be generated either by using an orthophoto of the scene or by leveraging the road point cloud. Different sampling rates are then applied to the NURBS surface. A high sampling rate is used for the road area to capture detailed features, while a lower rate is used for the surrounding terrain to reduce data complexity. Two meshes with these differing sampling rates are created and merged using the road mask. Both meshes can be merged using the Delaunay triangulation technique, forming a Triangulated Irregular Network (TIN) model. This model maintains accuracy in the road area while being efficient in size. Notably, storing the NURBS model using its parameters allows for on-the-fly surface mesh creation depending on the downstream task, making this method highly efficient and flexible.

### Final Quality Checks

To validate the created road surface reconstruction (box RSR in FIG. 2), fitting errors can be assessed, and a smoothness score can be computed to evaluate the surface quality. If the smoothness is insufficient, the sampling rate is increased to account for more triangles inside the road area. This iterative process ensures that the final road surface is both accurate and smooth.

By following these steps, the process achieves high-quality road surface reconstructions, ensuring smoothness, completeness, and accuracy. These features make it highly suitable for applications in autonomous driving, urban planning, and virtual simulations.

### Summary

The process for reconstructing a road surface shown in FIG. 2 and explained above leverages Non-Uniform Rational B-Splines (NURBS) to perform surface fitting automatically within a comprehensive pipeline. This approach offers significant advantages in flexibility and precision, enabling more accurate surface reconstructions that ensure both smoothness and completeness, crucial for autonomous navigation and road assessment tasks. By effectively mitigating the issues of bumpy surfaces and holes, this method provides robust road reconstructions suitable for high-fidelity simulations and real-world applications.

In some non-limiting embodiments, the road surface reconstruction is used for trajectory planning, trajectory prediction, vehicle simulation and/or traffic simulation, e.g., of an automated vehicle, or is configured for trajectory planning, trajectory prediction, vehicle simulation and/or traffic simulation, e.g., of an automated vehicle. Trajectory planning of an automated vehicle involves the process of determining a safe, efficient, and feasible path for the vehicle to follow over time. This process integrates various aspects, including speed, acceleration, steering, environment sensing and obstacle avoidance, to navigate from a starting point to a destination while adhering to traffic rules and ensuring passenger safety.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A computer-implemented method for road surface reconstruction, comprising:
- obtaining a road point cloud representing a surface of at least one road;
- performing a fitting process based on the road point cloud using a parametric three-dimensional surface model to generate a road surface reconstruction of the surface of the at least one road; and
- outputting the road surface reconstruction.

2. Method of claim 1, wherein the fitting process includes optimizing one or more parameters of the parametric three-dimensional surface model by:
- defining evaluation points or areas where a loss function is evaluated during optimizing the one or more parameters;
- defining the loss function to measure closeness between the road point cloud and the parametric three-dimensional surface model;
- adding a regularization term to the loss function; and
- performing optimization to get the optimal parameters of the parametric three-dimensional surface model, in particular wherein the optimization is a gradient descent optimization.

3. Method of claim 2, wherein the parametric three-dimensional surface model is a Non-Uniform Rational B-Splines, NURBS, model, and wherein the one or more parameters which are optimized are control points, weights, and knots of the NURBS model, in particular wherein:
- the control points are initialized at a position in 3D space; and
- the knots are kept uniform and only a z-component of the control points is optimized after initialization.

4. Method of any one of claims 1 to 3, further including:
- applying a clustering algorithm to the road point cloud to generate a filtered road point cloud, wherein the fitting process is applied to the filtered road point cloud to generate the road surface reconstruction of the surface of the at least one road.

5. Method of claim 4, wherein the clustering algorithm is an Elevation-Constrained Spatial Road Clustering, ECSRC, algorithm.

6. Method of any one of claims 1 to 5, wherein the road point cloud is
- based on sensor data, in particular segmented LiDAR, stereo camera, or RGBD data; or
- obtained by a 3D or 2.5D reconstruction with semantic segmentation, in particular a 3D or 2.5D reconstruction of image data; or
- obtained by means of an elevation model with segmented orthophotos.

7. Method of any one of claims 1 to 6, further including:
- obtaining a terrain point cloud representing an area outside the at least one road, wherein the parametric three-dimensional surface model further uses the road point cloud and terrain point cloud to generate the road surface reconstruction of the surface of the at least one road, in particular wherein an additional loss term is added to the loss function to fit the parametric three-dimensional surface model to the terrain as well.

8. Method of claim 7, further including:
- obtaining a scene point cloud; and
- generating the road point cloud and the terrain point cloud from the scene point cloud.

9. Method of claim 7 or 8, wherein the terrain point cloud is obtained using Digital Surface Model, DSM, Generation or Digital Terrain Model, DTM, Generation.

10. Method of any one of claims 1 to 9, further including:
- applying a dynamic sampling technique to the road surface reconstruction generated by the parametric three-dimensional surface model to generate a mesh with varying resolutions.

11. Method of claim 10, wherein a higher sampling rate is used for a road area and a lower sampling rate is used for surrounding terrain.

12. Method of any one of claims 1 to 11, further including:
- performing at least one quality check to evaluate a surface quality of the reconstructed road surface, particularly based on a surface gradient map and/or fitting distances.

13. A computer program comprising instructions which, when the program is executed by a computer, cause the computer to carry out the method of any one of claims 1 to 12.

14. A computer-readable storage medium comprising instructions which, when the program is executed by a computer, cause the computer to carry out the method of any one of claims 1 to 12.

15. A data processing system for road surface reconstruction, comprising one or more processors configured to:
- obtain a road point cloud representing a surface of at least one road;
- perform a fitting process based on the road point cloud using a parametric three-dimensional surface model to generate a road surface reconstruction of the surface of the at least one road; and
- output the road surface reconstruction.
